# EUROPÄISCHE PATENTSCHRIFT

(11) **EP 0 810 928 B1**
(45) Veröffentlichungstag und Bekanntmachung des Hinweises auf die Patenterteilung: **03.05.2000**
(21) Anmeldenummer: 96904827.1
(22) Anmeldetag: 20.02.1996
(51) Int. Cl.: B60G 17/04, B60G 17/015, B60G 21/06

(54) **HÖHENREGULIERBARE, HYDROPNEUMATISCHE FEDERUNG**
HEIGHT-REGULATED HYDROPNEUMATIC SUSPENSION
SUSPENSION HYDROPNEUMATIQUE A HAUTEUR REGULEE

(30) Priorität: 20.02.1995 DE 19505712
(43) Veröffentlichungstag der Anmeldung: 10.12.1997
(73) Patentinhaber: MOWAG Motorwagenfabrik AG, 8280 Kreuzlingen (CH)
(72) Erfinder: GREUTER, Adolf, CH-8274 Tägerwilen (CH); DOLL, Bernhard, CH-8573 Siegershausen (CH); LORINI, Romano, CH-9230 Flawil (CH); SCHROEDER, Jens, D-78462 Konstanz (DE); OSTERWALDER, Franz, CH-8020 Kreuzlingen (CH)
(74) Vertreter: Liedl, Christine, Dipl.-Chem.
(86) Internationale Anmeldenummer: EP9600698
(87) Internationale Veröffentlichungsnummer: WO9626079

(56) Entgegenhaltungen:
- EP-A- 0 385 618
- DE-A- 1 902 918
- DE-A- 2 604 809
- DE-A- 3 528 829
- DE-B- 1 157 940
- FR-A- 949 761
- US-A- 2 887 324
- US-A- 2 926 023
- US-A- 4 872 702
- US-A- 4 898 257
- PATENT ABSTRACTS OF JAPAN vol. 016, no. 072 (M-1213), 21.Februar 1992 & JP,A,03 262720 (HINO MOTORS LTD), 22.November 1991,
- PATENT ABSTRACTS OF JAPAN vol. 008, no. 152 (M-309), 14.Juli 1984 & JP,A,59 048211 (ISUZU JIDOSHA KK), 19.März 1984,
- PATENT ABSTRACTS OF JAPAN vol. 015, no. 113 (M-1094), 18.März 1991 & JP,A,03 005223 (NHK SPRING CO LTD), 11.Januar 1991,
- PATENT ABSTRACTS OF JAPAN vol. 018, no. 013 (M-1539), 11.Januar 1994 & JP,A,05 254430 (SUMITOMO METAL IND LTD), 5.Oktober 1993,
- SOVIET PATENT ABSTRACTS Section PQ, Week 9012 2.Mai 1990 Derwent Publications Ltd., London, GB; Class Q12, AN 90-089245 XP002006587 & SU,A,1 505 802 (MINSK CAR) , 7.September 1989

## Beschreibung

Die Erfindung betrifft ein Verfahren zur Abstandsregulierung zwischen dem Rahmen oder Aufbau eines Fahrzeuges und einer Radeinheit oder Achse mittels der dazwischen angeordneten hydropneumatischen Federung, sowie eine Vorrichtung zur Durchführung dieses Verfahrens.

Hydropneumatische Federungen bestehen im allgemeinen aus einem Gasvolumen und einem Flüssigkeitsvolumen, die über einen Trennkolben in einem festen Gehäuse aufgenommen sind. Dabei ist das das Flüssigkeitsvolumen umgebende Gehäuse in irgendeiner Art und Weise zusammenschiebbar, wodurch der für das Flüssigkeitsvolumen zur Verfügung stehende Raum verringert werden kann und von den beiden gegeneinander bewegbaren Teilen des Flüssigkeits-Gehäuses ist der eine Teil am Aufbau bzw. Rahmen des Fahrzeuges und der andere Teil an der Achse bzw. Radeinheit befestigt. Zusätzlich ist das Flüssigkeitsvolumen durch eine interne Drossel in zwei Teilvolumina unterteilt.

Beim Zusammenschieben des das Flüssigkeitsvolumen umgebenden, zweiteiligen, festen Gehäuses wird daher - aufgrund der Inkompressibilität der Flüssigkeit - der die Flüssigkeit ebenfalls begrenzende Trennkolben in Richtung auf das angrenzende Gasvolumen durchgebogen, und dabei das Gasvolumen verringert und das enthaltene Gas komprimiert.

Dabei erfüllt das Gasvolumen die Federungsfunktion und das Flüssigkeitsvolumen aufgrund der internen Drossel die Dämpfungsfunktion.

Je größer das enthaltene Volumen der Dämpfungsflüssigkeit ist, umso größer - bei ansonsten unveränderter Anordnung, insbesondere der Abmessungen des die Dämpfungsflüssigkeiten umgebenden Gehäuses - ist der durch diese Hydrop-Feder bewirkte Abstand zwischen dem Rahmen und der Achse des Fahrzeuges.

Aus der DE-A- 1 902 918 ist eine Vorrichtung zum Verstellen der Niveaulage eines Fahrzeuges bekannt, welche zur Abstandsregulierung zwischen dem Rahmen bzw. dem Aufbau einer Radeinheit bzw. Achse bei einem Kraftfahrzeug mittels eines hydropneumatischen Federungselements durch Veränderung des Volumens der in der Hydrop-Feder aufgenommenen Dämpfungsflüssigkeit dient. Ausgehend von dem in der statischen Stellung (Mittelstellung) enthaltenen statischen Volumen wird bei der bekannten Vorrichtung das statische Volumen zur Abstandsvergrößerung um ein Zusatzvolumen ergänzt und zur Abstandsverkleinerung um ein Minderungsvolumen verringert. Zum Einbringen bzw. Entnehmen des Zusatz- bzw. Minderungsvolumens ist ein einziger Dosierzylinder vorgesehen, so dass die Steuerung der Volumenverschiebungsvorgänge verhältnismäßig kompliziert ist.

Aus der EP-A- 0 385 618 ist ein hydropneumatisches Federungssystem für Fahrzeuge bekannt, bei welchem einer hydropneumatischen Federbaugruppe, welche den Fahrzeugrahmen gegenüber der zugehörigen Radachse federt und dämpft und welche aus einem Hydraulikzylinder und einer Gasfeder besteht, aus einer Dosiereinheit ein Zusatzvolumen bzw. ein Minderungsvolumen an Dämpfungsflüssigkeit hinzugefügt bzw. entnommen werden kann. Die Dosiereinheit besteht bei dem bekannten System aus einem einzigen Dosierzylinder, so dass auch hier die Volumenverschiebungsvorgänge zu einer verhältnismäßig komplizierten Ansteuerung des Dosierzylinders führen.

Es ist daher die Aufgabe gemäß der vorliegenden Erfindung, ein möglichst einfaches Verfahren und eine diesbezügliche Vorrichtung zu schaffen, um während des Betriebes des Fahrzeuges mit geringem konstruktiven und damit geringem Kostenaufwand diesen Abstand von der sogenannten statischen Lage, also der Normallage aus, zu vergrößern oder zu verkleinern, und dies möglichst getrennt für die beiden Seiten des Fahrzeuges und/oder vorderen und hinteren Bereich des Fahrzeuges. Bei dieser Lösung sind die Funktionsteile möglichst gegen Beschädigung geschützt.

Diese Aufgabe wird durch die kennzeichnenden Merkmale der Ansprüche 1 und 3 gelöst. Vorteilhafte Ausführungsformen ergeben sich aus den Unteransprüchen.

Dadurch, daß ausgehend von einer sogenannten statischen Stellung, der Mittelstellung, der Abstand zwischen Rahmen und Radeinheit um eine definierte Strecke vergrößert oder verkleinert werden kann, ergibt sich ein sehr einfacher konstruktiver Aufbau und auch eine sehr einfache Steuerung, so daß selbst bei im Notfall rein manueller Ansteuerung es noch möglich ist, die unterschiedlichen Fahrzeugseiten oder Fahrzeugfront und Fahrzeugheck getrennt anzusteuern.

Dadurch, daß dem statischen Volumen ein Zusatzvolumen hinzugefügt oder ein Minderungsvolumen abgezogen wird, ist ein konstruktiver Aufbau möglich, der ohne druckabhängige Sensoren auskommt, beispielsweise nur mit wegabhängigen Sensoren oder völlig ohne Sensorik bei Ansteuerung betätigt wird.

Im Normalfall wird zwar ein derartiges Fahrzeug über eine Steuerung verfügen, die über entsprechende Sensoren z.B. in regelmäßigen Abständen den Ist-Zustand der einzelnen Hydrop-Federn auf Übereinstimmung mit dem über einen Steuerhebel eingestellten Soll-Zustand überprüft. Bei Ausfall der Steuerungskomponenten und auch der Sensoren ist es dann jedoch immer noch möglich, das Fahrzeug rein manuell zu steuern.

Dies ist insbesondere bei militärisch genutzten Fahrzeugen wichtig, bei denen auch die übrigen Vorteile einer gegenüber der Normalstellung möglichen Hochstellung oder Tiefstellung des Fahrzeuges besonders stark ins Gewicht fallen, nämlich
- beim Hochstellen des Fahrzeuges die Verbesserung der Geländemobilität, die Verbesserung der Überschreitfähigkeit von Hindernissen sowie die gezielte Schrägstellung des Fahrzeugaufbaus in Längs- ooder Querrichtung zur Vergrößerung der Elevation oder Depression einer aufgebauten Waffenanlage und
- beim Tiefstellen des Fahrzeuges die niedrigere Gesamthöhe des Fahrzeuges für Unterfahrungen, insbesondere die Lufttransportfähigkeit des Fahrzeuges, bessere Tarnung infolge niedrigerer Silhouette, bessere Straßenlage bei Straßen- und Autobahnfahrt, Erleichterung beim Be- und Entladen sowie bei bestimmten Wartungsarbeiten.

Durch die Verwendung von zwei parallelgeschalteten Dosierzylindern, die einerseits mit der Fahrzeughydraulik und andererseits mit den angeschlossenen Hydrop-Federn verbunden sind, ist mit wenigen, einfachen Funktionsteilen die Einstellung von drei unterschiedlichen Höhenlagen unabhängig von der momentanen Schrägstellung des Fahrzeuges dessen Beladung und ähnlichen sich ändernden Faktoren möglich. Zur Ansteuerung ist lediglich ein Wegeventil, vorzugsweise ein Magnetventilblock, notwendig, der wahlweise auf beide, einen oder keinen der beiden Dosierzylinder den Druck der Fahrzeughydraulik freigibt.

Dadurch ist einerseits die Fahrzeughydraulik getrennt von der Federungshydraulik der Hydrop-Federn. Da nur die Hydrop-Federn selbst direkt an den Radeinheiten bzw. Achsen angeordnet sein müssen, können alle anderen Funktionsteile, also auch bereits die Dosierzylinder der Dosiereinheiten, innerhalb des Aufbaus des Fahrzeuges und damit vor Beschädigungen geschützt untergebracht werden, was insbesondere wiederum bei militärisch genutzten Fahrzeugen von Vorteil ist. Bei Beschädigung der Hydrop-Federn, beispielsweise durch Beschuß, bleibt die innenliegende Fahrzeughydraulik voll funktionsfähig.

Die in den Dosierzylindern zwischen den beiden Endstellungen in Längsrichtung hin- und herbewegbaren Trennkolben, die die in den Hydrop-Federn verwendete Dämpfungsflüssigkeit vom Hydraulikmedium der Fahrzeughydraulik trennen, werden hinsichtlich des Erreichens einer ihrer Endstellungen durch entsprechende Sensoren, vorzugsweise Induktivaufnehmer, überwacht, die direkt an den Dosierzylindern angebracht sind. Über diese Sensoren wird einerseits dem Fahrer durch z.B. optische Anzeigeelemente das Erreichen der vorgewählten Soll-Lage der Dosiereinheit angezeigt, und andererseits durch Ansteuerung einer entsprechenden elektrischen Steuerung die Überprüfung der Ist-Lage in vorgegebenen Zeitabständen und ggf. die Nachregulierung ermöglicht.

Wenn der mit Druck beaufschlagte Dosierzylinder zum Einhalten seiner Soll-Stellung permanent mit der Fahrzeughydraulik hydraulisch verbunden wäre, würden aufgrund der Länge der vorhandenen Verbindungsleitungen etc. Schwingungen in diese Fluidsäule auftreten können, die zu unerwünschten Erscheinungen in den Dosierzylindern und damit auch in den Hydrop-Federn und somit auch zu unerwünschten Anzeigeergebnissen der an den Dosierzylindern angebrachten Sensoren führen würden. Um dies zu vermeiden, ist die Verbindung zwischen der Fahrzeughydraulik, also dem die Dosiereinheit ansteuernden Magnetventilblock, und der Dosiereinheit möglichst nahe an der Dosiereinheit über ein Sperrventil trennbar. Nach Erreichen des eingestellten Soll-Zustandes, also der gewünschten Endstellungen der Trennkolben in den Dosierzylindern, werden diese Sperrventile geschlossen und erst geöffnet, wenn eine Nachregelung aufgrund Veränderung der Ist-Lage der Trennkolben notwendig ist, oder eine neue Soll-Lage vom Fahrer vorgegeben wird. Die Überprüfung der Einhaltung der Ist-Lage erfolgt in festgelegten Zeitintervallen durch die elektrische Steuerung. Der Magnetventilblock könnte mit den Sperrventilen funktionsvereinigt werden, wenn sich der Magnetventilblock unmittelbar an der Dosiereinheit befinden würde und eine zusätzliche Sperrstellung für beide Dosierzylinder aufweisen würde. Dies würde jedoch ein Zusammenlegen aller Magnetventilblöcke eines Fahrzeuges zu einer zentralen Ventileinheit verhindern.

Nach dem Anfahren einer neuen Soll-Stellung erfolgt das Schließen der Sperrventile nicht nach einem bestimmten Zeitraum nach Vorgabe der neuen Soll-Stellung, sondern nach Feststellung des Erreichens der Soll-Stellungen der Trennkolben durch die entsprechenden Sensoren, da dies unter Umständen einen längeren Zeitraum in Anspruch nehmen kann, falls - z.B. bei Geländefahrten - aufgrund der momentanen Geländesituation eine Radeinheit einer starken Belastung unterliegt, und damit das Druckniveau in der entsprechenden Hydrop-Feder momentan höher liegt als der Arbeitsdruck der Fahrzeughydraulik. In diesem Fall ist eine Verschiebung der Trennkolben mittels Fahrzeughydraulik in die gewünschte Lage erst möglich, nachdem der Druck in den angeschlossenen Hydrop-Federn unter dem Arbeitsdruck der Fahrzeughydraulik abgesunken ist.

Vorzugsweise sind die Sperrventile mittels einer Feder, deren Kraft von einem entsprechenden, dagegengerichteten Magnetventil überwunden werden muß, in die geöffnete Stellung vorgespannt, um auch bei Stromausfall die Höhenverstellung wirksam zu halten. Ebenso empfiehlt es sich, den Magnetventilblock mittels Feder in die statische Mittelstellung vorzuspannen. Eine besonders günstige konstruktive Lösung ergibt sich, wenn die beiden Dosierzylinder entweder fluchtend oder parellel nebeneinanderliegend zu einer Dosiereinheit zusammengefaßt sind. Gerade in letzterem Falle ergibt sich eine sehr kompakte und aus wenigen Einzelteilen bestehende Dosiereinheit, indem die beiden identischen Dosierzylinder mit identischen innenlängsverschiebbaren Dosierkolben an ihren Stirnseiten jeweils über gemeinsame, beide Dosierzylinder übergreifende Kopfstücke verschlossen werden. Dabei weist das eine Kopfstück den Anschluß zur Fahrzeughydraulik auf, und an dem Kopfstück sind - in den Verbindungsbohrungen vom Anschluß zu den jeweiligen Dosierzylindern - die Sperrventile für den jeweiligen Dosierzylinder von der Außenseite her in das Kopfstück eingeschraubt. Damit ist eine minimal kurze Fluidsäule zwischen dem Sperrventil und dem Dosierzylinder gegeben.

Das andere Kopfstück enthält eine die beiden Dosierzylinder verbindende Bohrung, welche einen Außenanschluß zu der oder den damit verbundenen Hydrop-Federn aufweist, deren Dämpfungsvolumina über diese Verbindungsleitung in Parallelschaltung miteinander verbunden werden.

In den beiden Kopfstücken sind ferner die Sensoren für das Erreichen der Endstellungen der Trennkolben in den einzelnen Dosierzylindern angeordnet. Dabei können einfache, druckfeste Taster, z.B. Induktivgeber, in entsprechende, in Längsrichtung der Dosierzylinder verlaufende Bohrungen eingeschraubt werden, deren Taster soweit in die Stirnseite der Arbeitsräume der Dosierzylinder hineinragen, daß sie bei einem am Ende anliegenden Trennkolben durch diesen betätigt werden.

Diese beiden Kopfstücke können - in an sich bekannter Art und Weise - radial über die beiden Dosierzylinder hinausragen und in Längsrichtung über Zuganker miteinander verspannt werden, so daß sich eine einfach aufgebaute und leicht abzudichtende Dosiereinheit ergibt.

Eine Ausführungsform gemäß der Erfindung ist im folgenden beispielhaft näher beschrieben. Es zeigen:
- Fig. 1:: eine Prinzipdarstellung eines erfindungsgemäß ausgestatteten Fahrzeuges in der Aufsicht,
- Fig. 2:: eine Prinzipdarstellung zu einer der Dosiereinheiten 21 und
- Fig. 3:: eine andere konstruktive Lösung der Dosiereinheit.

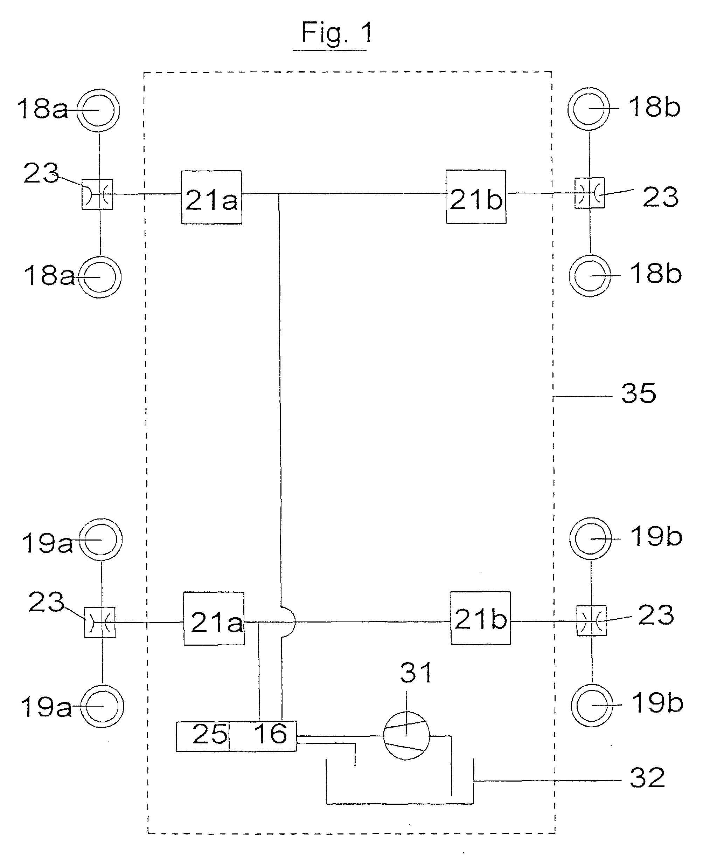

Fig. 1 zeigt ein Fahrzeug in der Aufsicht, welches mit insgesamt acht Hydrop-Federn, die höhenverstellbar gemäß der Erfindung sind, ausgestattet ist. Dabei kann jede Hydrop-Feder eine separate Achseinheit stützen, oder auch die jeweils zwei Hydrop-Federn 18a bzw. 18b usw. immer gemeinsam eine Radeinheit bzw. ein Ende eines Achskörpers.

Jedes Paar von Hydrop-Federn 18a, 18b, 19a, 19b ist parallelgeschaltet und mit jeweils einer Dosiereinheit 21 a, 21 b verbunden.

In der Darstellung der Fig. 1 ist jedes Paar 21a, 21 b von Dosiereinheiten gemeinsam einem Magnetventilblock 16 zugeordnet, so daß die jeweils linke und rechte Dosiereinheit 21a, 21b der Fahrzeugfront und des Fahrzeughecks nur jeweils gemeinsam höhenverstellt werden können. Damit ist eine Veränderung der Höhenlage entweder für das gesamte Fahrzeug möglich oder getrennt für Fahrzeugfront und Fahrzeugheck.

Wenn zusätzlich die beiden Seiten des Fahrzeuges getrennt höhenverstellbar ausgebildet sein sollen, muß jeder der Dosiereinheiten 21a, 21b ein separater Magnetventilblock zugeordnet sein.

Bei der in Fig. 1 dargestellten Lösung wird der Magnetventilblock 16 von der Pumpe 31 der Fahrzeughydraulik mit Arbeitsdruck versorgt. Bei der Fahrzeughydraulik handelt es sich um ein offenes System, bei welchem Hydraulikflüssigkeit in den Tank 32 abgelassen wird, und die Pumpe 31 auch aus diesem ansaugt.

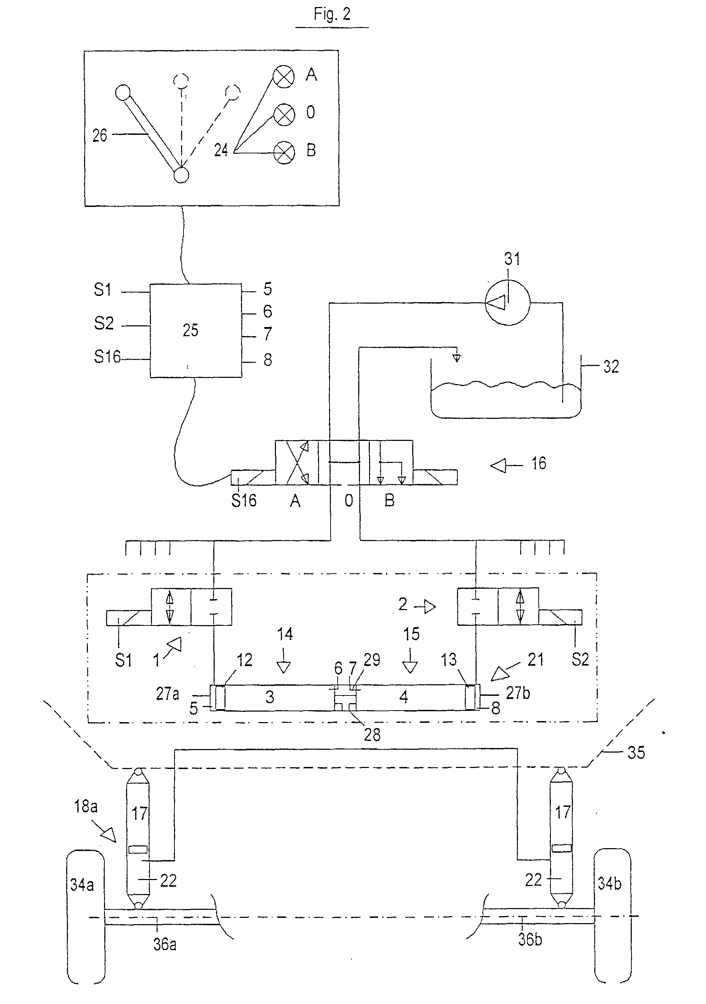

Fig. 2 zeigt - ebenfalls in Prinzipdarstellung, bezüglich Fahrzeugaufbau und Rädern jedoch in der Seitenansicht - ein erfindungsgemäß ausgestattetes Fahrzeug.

Dabei ist im unteren Teil der Darstellung zu erkennen, daß alle Funktionsteile außer den Hydrop-Federn 18a, 18b, die zwischen dem Achsende 36a, 36b und dem Rahmen 35 montiert sind, alle übrigen Funktionsteile geschützt oberhalb des Rahmens 35 und damit innerhalb des geschützten, beispielsweise gepanzerten, Aufbaus untergebracht sind. Die in der Fig. 2 dargestellten Hydrop-Federn 18a, 18b und die zugeordneten Achsenden 36a, 36b und Räder 34a, 34b können, wie oben erläutert, an den beiden Enden der gleichen Achse oder auf der gleichen Seite des Fahrzeuges bei benachbarten Achsen bzw. Radeinheiten angeordnet sein.

Dabei sind die in den Hydrop-Federn 18a, 18b von den Gasvolumen 17 getrennten Dämpfervolumen 22, die mit Dämpfungsflüssigkeit gefüllt sind, parallel geschaltet, also untereinander verbunden und zugleich mit dem Anschluß 28 der Dosiereinheit 21.

Bei der Lösung gemäß Fig. 2 besteht die Dosiereinheit 21 aus zwei fluchtend zueinander angeordneten und durch eine feste Mittelplatte 29 getrennten Dosierzylindern 14, 15, in denen jeweils ein Trennkolben 12, 13 zwischen den beiden Endstellungen hin- und herbewegbar ist. Das im zurückgezogenen, also von der Mittelplatte 29 entfernten, Zustand zwischen den Trennkolben 12 bzw. 13 und der Mittelplatte 28 aufgenommene Volumen ist das Zusatzvolumen 3 bzw. Minderungsvolumen 4, welches gegenüber der statischen Mittelstellung in das gesamte Dämpfungsvolumen 22 zusätzlich eingegeben bzw. aus diesem entnommen wird. Dies ist möglich, indem die Dosierzylinder 14, 15 auf der bzgl. der Trennkolben 12, 13 der Mittelplatte 29 gegenüberliegenden Seite, also in den Arbeitsvolumen 27a, 27b über Sperrventile 1 bzw. 2 und einen Magnetventilblock 16 mit dem Arbeitsdruck der Fahrzeughydraulik an den Anschlüssen 9a, 9b beaufschlagbar ist.

Die Fahrzeughydraulik ist in Fig. 2 als offenes System dargestellt mit einer Pumpe 31, die aus einem Tank 32 ansaugt, in welchen auch der Rücklauf zurückfließt.

Über das Blockventil 16 sind folgende Funktionsstellungen realisierbar:
- Stellung A:: Beaufschlagen des Arbeitsvolumens 27b im Dosierkolben 15, Arbeitsvolumen 27a im Dosierzylinder 14 drucklosstatische Stellung der Hydrop-Federn 18a, 18b)
- Stellung 0:: beide Arbeitsvolumen 27a, 27b drucklos (Tiefstellung der Hydrop-Federn 18a, 18b)
- Stellung B:: beide Arbeitsvolumen 27a, 27b und damit beide Dosierzylinder 14, 15 unter dem Arbeitsdruck der Fahrzeughydraulik (Hochstellung der Hydrop-Federn 18a, 18b)

Gegenüber der statischen Stellung wird somit bei Umschalten auf die Stellung 0 das Minderungsvolumen 4 aus der Summe der Dämpfervolumen 22 abgezogen und bei Umstellung auf Stellung B das Zusatzvolumen 3 in die Summe der Dämpfervolumen 22 eingegeben.

In einer Baueinheit vereinigt mit der Dosiereinheit 21 sind die in der Verbindungsleitung zwischen dem Magnetventilblock 16 und den Arbeitsvolumen 27a, 27b zwischengeschalteten Sperrventile 1, 2 unmittelbar an oder in der Dosiereinheit 21 untergebracht. Mittels der elektromagnetischen Schalter S1, S2 können diese Sperrventile 1, 2 von der geschlossenen in die Durchgangsstellung verstellt werden. Dabei wird nur bei Änderung der Beaufschlagung eines der Arbeitsvolumen 27a, 27b das zugeordnete Sperrventil 1, 2 auf Durchgang gestellt und ansonsonsten geschlossen gehalten, um die Dosiereinheit 21 hydraulisch so weit als möglich von der Fahrzeughydraulik abzukoppeln. Dadurch wird vermieden, daß eventuell in der Fahrzeughydraulik auftretende Fluidschwingungen auf die Dosiereinheit 21 übertragen werden, und damit zu Irritationen der Sensoren 5 bis 8 führen.

Die Sperrventile 1, 2 sind mittels Federn in die geschlossene Stellung vorgespannt.

Zwischen dem Magnetventilblock 16 und der aus der Dosiereinheit 21 und den Sperrventilen 1, 2 bestehenden Funktionseinheit sind parallele Anschlüsse für weitere Funktionseinheiten, wiederum bestehend aus Dosiereinheit und Sperrventilen, möglich.

In den Dosierzylindern 14, 15 sind die Sensoren 5, 6, 7, 8 jeweils an den Enden des Innenraumes der Dosierzylinder 14, 15 angeordnet und registrieren, ob die Trennkolben 12, 13 sich in der einen oder anderen Endlage befinden.

Die Soll-Stellung der Anlage wird über die Schiebestellung des Magnetventilblockes 16 eingestellt. Dies erfolgt über einen Steuerhebel 26 am Fahrerplatz des Fahrzeuges, der die drei Schaltstellungen A, 0 und B zur Auswahl stellt. Gegenüber diese Soll-Stellung wird die tatsächliche Ist-Stellung durch Anzeigeelemente 24, in diesem Fall durch Leuchtanzeigen für die drei Schaltzustände A, 0 und B dargestellt. Der Steuerhebel 26 könnte direkt mechanisch mit dem Schieber des Magnetventilblockes 16 verbunden sein. Vorzugsweise wird jedoch der Magnetventilblock 16 elektrisch mit dem Steuerhebel 26 verbunden, und eine Steuerung 25 zwischengeschaltet. Diese ist einerseits mit den Sensoren 5 bis 8 und andererseits mit den Schaltern S1, S2 und S16 der beteiligten Ventile elektrisch verbunden.

Dadurch ist es möglich, daß die Steuerung mittels eines entsprechenden Programmes in vorgegebenen Zeitabständen die gemeldete Ist-Stellung der Sensoren 5 bis 8 mit der vorgegebenen Soll-Stellung vergleicht, und bei Abweichung - nach Öffnung der Sperrventile 1, 2 - eine Nachregelung vornimmt.

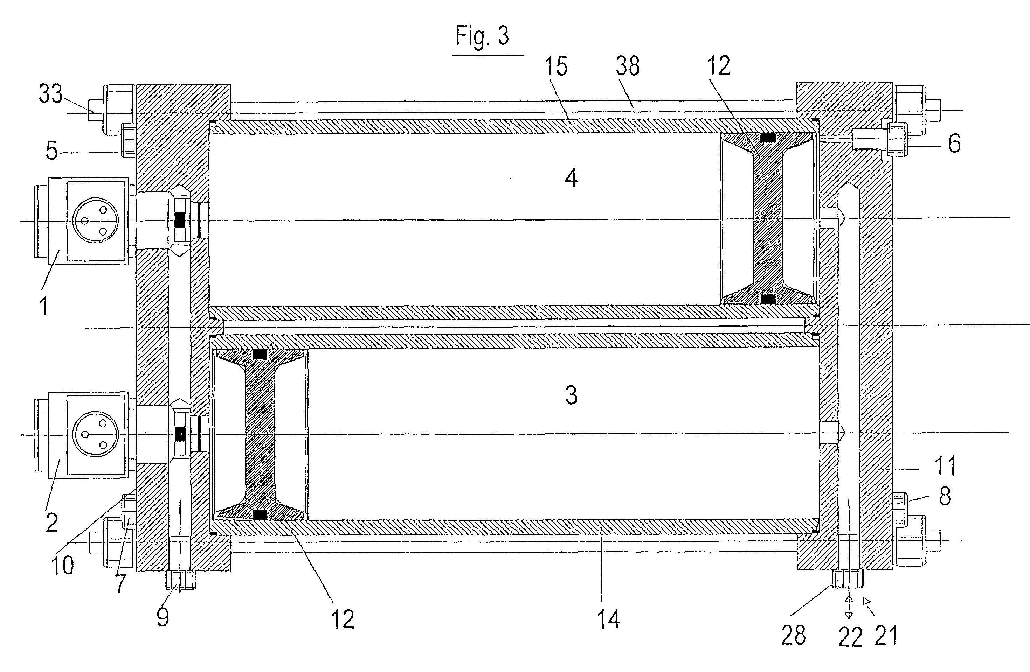

Fig. 3 zeigt in einer Schnittdarstellung eine Dosiereinheit 21, bei der jedoch im Gegensatz zu der Bauform der Fig. 2 die beiden Dosierzylinder 14, 15 nicht fluchtend, sondern parallel nebeneinander angeordnet sind. Die beiden Dosierzylinder 14, 15 bestehen aus Rohrabschnitten, die stirnseitig mit sich jeweils über beide Dosierzylinder 14, 15 erstreckende Kopfstücke 10, 11 und mittels eingelegter Ringdichtungen verschlossen sind. Die Kopfstücke 10, 11 sind dabei mittels außerhalb der Dosierzylinder verlaufender Zuganker 33 gegeneinander verspannt. In jedem der Dosierzylinder läuft ein Trennkolben 12, 13, der in seinen Endstellungen jeweils an einem der Kopfstücke 10, 11 anliegt.

Das Erreichen der Endstellung wird für jeden Trennkolben 12, 13 durch jeweils in Axialrichtung in das Kopfstück 10 bzw. 11 eingeschraubte Sensoren 5, 7 bzw. 6, 8 registriert, deren Taster sich stirnseitig bis in den Dosierzylinder 14 bzw. 15 hinein erstreckt, und beim Anliegen des Trennkolbens 12, 13 an der Innenseite eines der Kopfstücke 10, 11 betätigt wird.

Die Dosierkolben 14, 15 werden dabei von der in Fig. 3 linken Stirnseite her über den Anschluß 9 mit dem Arbeitsdruck der Fahrzeughydraulik beaufschlagt, indem der Anschluß 9 mit beiden Dosierzylindern 14, 15 in Verbindung steht.

Das Hydraulikmedium muß dabei vor dem Erreichen der Dosierzylinder 14, 15 die ebenfalls stirnseitig zum Dosierzylinder 14 bzw. 15 in das Kopfstück 10 hineingeschraubten Sperrventile 1, 2 passieren, über welche ebenfalls wiederum für die beiden Dosierzylinder 14, 15 getrennt deren Zulauf gesperrt werden kann.

In Fig. 3 ist die Dosiereinheit 21 in der Stellung A des Magnetventilblockes 16 der Fig. 2, also in der statischen Stellung, dargestellt. Dabei ist das Minderungsvolumen 4 des Dosierzylinders 15 nicht aus dem Dämpfervolumen 22 abgezogen, und das Zusatzvolumen 3 aus dem Dosierzylinder 14 nicht in das Dämpfungsvolumen 22 der Hydrop-Federn eingebracht.

Das Dämpfungsvolumen 22 ist über den Anschluß 28 im in Fig. 3 rechten Kopfstück 11 über entsprechende Bohrungen mit beiden Dosierzylindern 14, 15 verbunden, so daß sich in der Darstellung der Fig. 3 rechts von den Trennkolben 12, 13 Dämpfungsflüssigkeit, wie sie in den Hydrop-Federn verwendet wird, befindet, und links von dem Trennkolben 12, 13 Hydraulikflüssigkeit aus der Fahrzeughydraulik.

## Patentansprüche

1. Verfahren zur Abstandsregulierung zwischen dem Rahmen bzw. dem Aufbau einer Radeinheit bzw. Achse bei einem Kraftfahrzeug mittels eines hydropneumatischen Federungselementes durch Veränderung des Volumens der in der Hydrop-Feder aufgenommenen Dämpfungsflüssigkeit, wobei ausgehend von dem in der statischen Stellung (Mittelstellung) enthaltenen statischen Volumen zur Abstandsvergrößerung das statische Volumen um ein Zusatzvolumen (3) ergänzt wird und zur Abstandsverkleinerung das statische Volumen um ein Minderungsvolumen (4) verringert wird,
**dadurch gekennzeichnet, daß**
das Einbringen des Zusatzvolumens (3) in das statische Volumen bzw. das Entnehmen des Minderungsvolumens (4) aus dem statischen Volumen mittels zweier voneinander unabhängig betätigbarer Dosierzylinder (14, 15) erfolgt, wobei der erste Dosierzylinder (14) das Einbringen bewirkt und der zweite Dosierzylinder (15) das Entnehmen bewirkt.

2. Verfahren nach Anspruch 1,
**dadurch gekennzeichnet, daß**
das Zusatzvolumen (3) und das Minderungsvolumen (4) feststehende, unveränderbare Volumina sind.

3. Hydropneumatische Federung für Fahrzeuge, wobei der Fahrzeugrahmen an beiden Fahrzeugseiten gegenüber einer oder mehreren Radachsen mittels Hydrop-Federn (18a, 18b, 19a, 19b) gefedert und gedämpft ist, wobei wenigstens eines der Volumina (Dämpfervolumen (22)) der Hydrop-Federn veränderbar ist, wobei
- einer oder mehreren parallelgeschalteten Hydrop-Federn (18a, 18b) bzw. (19a, 19b) jeweils eine Dosiereinheit (21a, 21b) zugeordnet ist, welche jeweils wenigstens ein definiertes Zusatzvolumen (3) und/oder Minderungsvolumen (4) der momentanen Summe der Dämpfungsvolumen (22) der zugeordneten Hydrop-Federn (18a, 18b) bzw. (19a, 19b) hinzufügen bzw. entnehmen kann und
- der Abstand Fahrzeugrahmen/Radachse im Bereich der mit der Dosiereinheit (21 a, 21b) verbundenen Hydrop-Federn (18a, 18b, 19a, 19b) durch Feststellung des Ist-Funktionszustandes der Dosiereinheit (21 a, 21 b) mittels an der Dosiereinheit angeordneter Sensoren (5, 6, 7, 8) auf den Soll-Funktionszustand nachregelbar ist,
- jede Dosiereinheit (21a, 21b) aus zwei parallelgeschalteten Dosierzylindern (14, 15) besteht,
- wobei in jedem Dosierzylinder (14, 15) ein Trennkolben (12, 13) zwischen den beiden Endstellungen im Dosierzylinder hin- und herbewegbar ist und den Inhalt des Dosierzylinders in ein steuerseitiges Arbeitsvolumen mit Verbindung zur Fahrzeughydraulik und ein gegenüberliegendes Zusatzvolumen (3) bzw. Minderungsvolumen (4) mit Verbindung zu den Dämpfervolumina (22) der angeschlossenen Hydrop-Federn (18a, 18b) bzw. (19a, 19b) unterteilt und
- die Arbeitsvolumina (27a, 27b) unabhängig voneinander mit dem Arbeitsdruck der Fahrzeughydraulik oder mit dem Umgebungsdruck beaufschlagbar sind.

4. Federung nach Anspruch 3,
**dadurch gekennzeichnet, daß**
die Sensoren (5, 6, 7, 8) an der Dosiereinheit (21) das Erreichen der Endstellungen der Trennkolben (12, 13) in den beiden Dosierzylindern (14, 15) anzeigen.

5. Federung nach einem der Ansprüche 3 oder 4,
**dadurch gekennzeichnet, daß**
von den beiden Arbeitsvolumina (27a, 27b) der Dosiereinheit (21) mittels eines Vier/Drei-Wege-Ventils (16) beide, eines oder keines mit dem Arbeitsdruck der Fahrzeughydraulik beaufschlagbar ist.

6. Federung nach Anspruch 5,
**dadurch gekennzeichnet, daß**
zwischen dem Ventil (16) und jedem der damit verbundenen Dosierzylinder (14, 15) der Dosiereinheit (21) jeweils ein unabhängig ansteuerbares Sperrventil (1, 2) angeordnet ist.

7. Federung nach einem der Ansprüche 3 bis 6,
**dadurch gekennzeichnet, daß**
die Dosierzylinder (14, 15) parallel nebeneinander liegend in einer Dosiereinheit (21) angeordnet sind und stirnseitig durch Kopfstücke (10, 11) verschlossen sind, die jeweils beide Dosierzylinder (14, 15) übergreifen, wobei
- im einen Kopfstück (10) ein Anschluß (9) zur Verbindung der Fahrzeughydraulik mit den beiden an das Kopfstück (10) anschließenden Arbeitsvolumina (27a, 27b) der Dosierzylinder (14, 15) angeordnet ist und
- im anderen Kopfstück (11) ein das Zusatzvolumen (3) bzw. das Minderungsvolumen (4) der beiden Dosierzylinder (14, 15) verbindender Durchlaß mit einem Anschluß (28) zu den Dämpfungsvolumina (22) der Hydrop-Federn (18a, 18b, 19a, 19b) angeordnet ist.

8. Federung nach einem der Ansprüche 3 bis 6,
**dadurch gekennzeichnet, daß**
die beiden Dosierzylinder (14, 15) der Dosiereinheit (21) fluchtend zueinander angeordnet sind mit gemeinsamer Mittelplatte (29) und stirnseitigen Endplatten, wobei die Mittelplatte (29) eine Verbindung zwischen den beiden angrenzenden Räumen der Dosierzylinder (14, 15) aufweist, welche mit dem Anschluß (28) zum Dämpfervolumen (22) verbunden sind, und die Endplatten jeweils einen Anschluß (9a, 9b) zur Fahrzeughydraulik aufweisen.

9. Federung nach einem der Ansprüche 7 oder 8 in Verbindung mit Anspruch 6,
**dadurch gekennzeichnet, daß**
die Sperrventile (1, 2) an den Kopfstücken (10, 11) bzw. Endplatten angeordnet sind.

10. Federung nach einem der Ansprüche 7 bis 9 in Verbindung mit Anspruch 6,
**dadurch gekennzeichnet, daß**
die Sperrventile (1, 2) elektromagnetisch oder hydraulisch betätigte Sitzventile sind.

11. Federung nach einem der Ansprüche 7 bis 10 in Verbindung mit Anspruch 6,
**dadurch gekennzeichnet, daß**
mittels eines Steuerhebels (26), insbesondere am Fahrerplatz des Fahrzeuges wahlweise die Tiefstellung, statische Stellung oder Hochstellung für die einzelnen Dosiereinheiten wählbar ist und eine Steuerung (25) die Einhaltung dieses Sollzustandes in regelmäßigen Zeitabständen überprüft und entsprechend nachregelt, und in den Zeitintervallen zwischen den Nachregelungen die Sperrventile (1, 2) geschlossen hält.

12. Verwendung der Federung nach einem der Ansprüche 3 bis 11 an einem gepanzerten Radfahrzeug,
**dadurch gekennzeichnet, daß**
mit Ausnahme der Hydrop-Federn (18a, 18b, 19a, 19b) alle anderen Funktionsteile innerhalb des gepanzerten Fahrzeugaufbaus angeordnet sind.

13. Verwendung der Federung nach einem der Ansprüche 3 bis 11 an einem mehrachsigen Radfahrzeug,
**dadurch gekennzeichnet, daß**
wenigstens die Gesamtheit der Vorderachsen als auch die Gesamtheit der Hinterachsen auf jeweils der linken und rechten Seite mit separaten, unabhängig voneinander ansteuerbaren Dosiereinheiten (21a, 21b, 21'a, 21'b) ausgestattet sind.

## Claims

1. Method for regulating the distance between the frame or the body and a wheel unit or axle of a vehicle by means of a hydropneumatic suspension element by changing the volume of the damping fluid contained in the hydropneumatic spring, whereby starting from the static volume contained in the static position (middle position), to increase the distance the static volume is augmented by an additional volume (3), and to decrease the distance the static volume is reduced by a reducing volume (4), characterised in that the addition of the additional volume (3) to the static volume and removal of the reducing volume (4) from the static volume is carried out by means of two metering cylinders (14, 15) which can be actuated independently of one another, the first metering cylinder (14) effecting the addition and the second metering cylinder (15) effecting the removal.

2. Method according to claim 1, characterised in that the additional volume (3) and the reducing volume (4) are fixed unchangeable volumes.

3. Hydropneumatic suspension for vehicles, wherein the vehicle frame is sprung and damped on both sides of the vehicle in relation to one or more wheel axles by means of hydropneumatic springs (18a, 18b, 19a, 19b), whereby at least one of the volumes - damper volume (22) - of the hydropneumatic springs is variable, whereby
- one or more hydropneumatic springs (18a, 18b and 19a, 19b) connected in parallel is in each case associated with a metering unit (21a, 21b) which in each case can add or remove a defined additional volume (3) and/or reducing volume (4) to or from the instantaneous sum of the damping volumes (22) of the associated hydropneumatic springs (18a, 18b and 19a, 19b), and
- the distance between the vehicle frame and the wheel axle in the area of the hydropneumatic springs (18a, 18b, 19a, 19b) connected to the metering unit (21a, 21b) can be adjusted to the set operational state by checking the actual operational state of the metering unit (21a, 21b) by means of sensors (5, 6, 7, 8) disposed on the metering unit,
- each metering unit (21a, 21b) consists of two metering cylinders (14, 15) connected in parallel,
- whereby in each metering cylinder (14, 15) a separating piston (12, 13) is moveable to and fro between the two end positions in the metering cylinder and divides the content of the metering cylinder into a control side working volume with a connection to the vehicle hydraulic system and an opposite additional volume (3) or reducing volume (4) with a connection to the damper volumes (22) of the connected hydropneumatic springs (18, 18b and 19a, 19b), and
- the working volumes (27a, 27b) can be subjected to the action of the working pressure of the vehicle hydraulic system or the ambient pressure independently of one another.

4. Suspension according to claim 3, characterised in that the sensors (5, 6, 7, 8) on the metering unit (21) indicate when the separating pistons (12, 13) reach the end positions in the two metering cylinders (14, 15).

5. Suspension according to one of claims 3 or 4, characterised in that both, one or neither of the two working volumes (27a, 27b) of the metering unit (21) can be subjected to the action of the working pressure of the vehicle hydraulic system by means of a 4/3-way valve (16).

6. Suspension according to claim 5, characterised in that in each case a check valve (1, 2) which can be actuated independently is disposed between the valve (16) and each of the associated metering cylinders (14, 15) of the metering unit (21).

7. Suspension according to one of claims 3 to 6, characterised in that the metering cylinders (14, 15) are disposed lying parallel next to one another in a metering unit (21) and are closed at the ends by head pieces (10, 11) which in each case fit over both metering cylinders (14, 15), whereby
- a connector (9) for connection of the vehicle hydraulic system to the two working volumes (27a, 27b) of the metering cylinders (14, 15) connected to the headpiece (10) is disposed in one headpiece (10) and
- a passage connecting the additional volume (3) or the reducing volume (4) of the two metering cylinders (14, 15) with a connector (28) to the damping volumes (22) of the hydropneumatic springs (18a, 18b, 19a, 19b) is disposed in the other headpiece (11).

8. Suspension according to one of claims 3 to 6, characterised in that the two metering cylinders (14, 15) of the metering unit (21) are disposed flush with one another with a common middle plate (29) and front end plates, the middle plate (29) exhibiting a connection between the two adjoining chambers of the metering cylinders (14, 15) which are connected with the connector (28) to the damper volume (22), and the end plates each exhibit a connector (9a, 9b) to the vehicle hydraulic system.

9. Suspension according to one of claims 7 or 8 in combination with claim 6, characterised in that the check valves (1, 2) are disposed on the headpieces (10, 11) or end plates.

10. Suspension according to one of claims 7 to 9 in combination with claim 6, characterised in that the check valves (1, 2) are electromagnetically or hydraulically actuated seat valves.

11. Suspension according to one of claims 7 to 10 in combination with claim 6, characterised in that optionally the low position, static position or high position can be selected for the individual metering units by means of a control lever (26), in particular in the driving position of the vehicle, and a control (25) checks the existence of this set state at regular intervals of time and makes corresponding adjustments, and keeps the check valves (1, 2) closed in the intervals of time between the adjustments.

12. Use of the suspension according to one of claims 3 to 11 on an armoured wheeled vehicle, characterised in that with the exception of the hydropneumatic springs (18a, 18b, 19a, 19b) all the other functional parts are disposed inside the armoured vehicle body.

13. Use of the suspension according to one of claims 3 to 11 on a multi-axle wheeled vehicle, characterised in that at least the totality of the front axles and the totality of the rear axles are equipped in each case on the left and right-hand sides with separate metering units (21a, 21b, 21'a, 21'b) which can be actuated independently of one another.

## Revendications

1. Procédé de régulation de la distance entre le châssis ou la carrosserie et un ensemble roue ou un essieu dans un véhicule automobile au moyen d'un élément de suspension hydropneumatique par modification du volume du liquide d'amortissement admis dans le ressort hydropneumatique, selon lequel, partant du volume statique contenu dans la position statique (position moyenne), le volume statique est augmenté d'un volume d'addition (3) pour l'augmentation de la distance et diminué d'un volume de soustraction (4) pour la réduction de la distance, caractérisé par le fait que l'ajout du volume d'addition (3) au volume statique ou le retrait du volume de soustraction (4) du volume statique est opéré au moyen de deux cylindres doseurs (14, 15) indépendants l'un de l'autre, le premier cylindre doseur (14) assurant l'ajout et le second cylindre doseur (15) assurant le retrait.

2. Procédé selon la revendication 1, caractérisé par le fait que le volume d'addition (3) et le volume de soustraction (4) sont des volumes prédéfinis, invariables.

3. Suspension hydropneumatique pour véhicules, le châssis de véhicule étant suspendu et amorti des deux côtés du véhicule par rapport à un ou plusieurs essieux, au moyen de ressorts hydropneumatiques, au moins un des volumes (volume d'amortissement (22)) des ressorts hydropneumatiques (18a, 18b) ou (19a, 19b) pouvant être modifié, dans laquelle
- une unité doseuse (21a, 21b) qui, selon le cas, peut ajouter ou soustraire un volume d'addition (3) et/ou un volume de soustraction (4) défini à/de la somme actuelle des volumes d'amortissement (22) des ressorts hydropneumatiques concernés (18a, 18b) ou (19a, 19b) est associée à un ou plusieurs ressorts hydropneumatiques (18a, 18b) ou (19a, 19b) connectés en parallèle,
- la distance châssis de véhicule/essieu, dans la région des ressorts hydropneumatiques (18a, 18b, 19a, 19b) connectés à l'unité doseuse (21a, 21b) peut être régulée dans l'état de service de consigne au moyen de capteurs (5, 6, 7, 8) disposés sur l'unité doseuse,
- chaque unité doseuse (21a, 21b) comprend deux cylindres doseurs (14, 15) connectés en parallèle,
- dans chaque cylindre doseur (14, 15), un piston de séparation (12, 13) se déplace suivant un mouvement de va-et-vient entre les deux positions extrêmes et divise le volume du cylindre doseur en un volume de travail côté commande qui communique avec l'hydraulique du véhicule et en un volume d'addition (3) ou un volume de soustraction (4) situé en vis-à-vis qui communique avec les volumes d'amortissement (22) des ressorts hydropneumatiques (18a, 18b) ou (19a, 19b) connectés et
- le volumes de travail (27a, 27b) peuvent être sollicités indépendamment l'un de l'autre par la pression de travail de l'hydraulique du véhicule ou par la pression atmosphérique.

4. Suspension selon la revendication 3, caractérisée par le fait que les capteurs (5, 6, 7, 8) sur l'unité doseuse (21) indiquent l'instant où les positions extrêmes des pistons de séparation (12, 13) dans les deux cylindres doseurs (14, 15) sont atteintes.

5. Suspension selon la revendication 3 ou 4, caractérisée par le fait qu'une vanne quatre/trois voies (16) permet d'appliquer la pression de travail de l'hydraulique du véhicule aux deux volumes de travail (27a, 27b) de l'unité doseuse (21), à l'un d'entre aux ou à aucun d'entre eux.

6. Suspension selon la revendication 5, caractérisée par le fait qu'une vanne d'arrêt (1, 2) pouvant être commandée séparément est disposée entre la vanne (16) et chacun des cylindres doseurs (14, 15) de l'unité doseuse (21) connectés à celle-ci.

7. Suspension selon une des revendications 3 à 6, caractérisée par le fait que les cylindres doseurs (14, 15) sont disposés l'un à côté de l'autre, parallèlement l'un à l'autre, et sont fermés côté frontal par des pièces d'extrémité (10, 11) qui chevauchent lesdits deux cylindres doseurs (14, 15), l'une des pièces d'extrémité (10) comportant un raccord (9) qui relie l'hydraulique du véhicule aux deux volumes de travail (27a, 27b) des cylindres doseurs (14, 15) et l'autre pièce d'extrémité (11) comportant un passage avec un raccord (28) menant aux volumes d'amortissement (22) des ressorts hydropneumatiques (18a, 18b, 19a, 19b), qui relie le volume d'addition (3) ou le volume de soustraction (4) des deux cylindres doseurs (14, 15).

8. Suspension selon une des revendications 3 à 6, caractérisée par le fait que les deux cylindres doseurs (14, 15) de l'unité doseuse (21) sont disposés dans l'alignement l'un de l'autre avec une plaque médiane (29) commune et des plaques d'extrémité frontales, la plaque médiane (29) comportant une communication entre les deux chambres contiguës des cylindres doseurs (14, 15) qui sont connectées au raccord (28) menant aux volumes d'amortissement (22) et que les plaques d'extrémité comportent chacune un raccord (9a, 9b) menant à l'hydraulique du véhicule.

9. Suspension selon une des revendications 7 ou 8 en combinaison avec la revendication 6, caractérisée par le fait que les vannes d'arrêt (1, 2) sont disposées sur les pièces d'extrémité (10, 11) ou sur les plaques d'extrémité.

10. Suspension selon une des revendications 7 à 9 en combinaison avec la revendication 6, caractérisée par le fait que les vannes d'arrêt (1, 2) sont des soupapes à siège à commande électromagnétique ou hydraulique.

11. Suspension selon une des revendications 7 ou 10 en combinaison avec la revendication 6, caractérisée par le fait que l'on peut sélectionner au choix la position basse, la position statique ou la position haute pour les différentes unités doseuses, à l'aide d'un levier de commande (26), en particulier depuis la place du conducteur, et qu'une commande (25) contrôle le respect de cette position de consigne et effectue une régulation adaptée et maintient les vannes d'arrêt (1, 2) fermées dans les intervalles entre les actions de régulation.

12. Utilisation de la suspension selon une des revendications 3 à 11 sur un véhicule blindé à roues, caractérisé par le fait qu'à l'exception des ressort hydropneumatiques (18a, 18b, 19a, 19b), tous les autres éléments fonctionnels sont disposés à l'intérieur de la carrosserie blindée du véhicule.

13. Utilisation de la suspension selon une des revendications 3 à 11 sur un véhicule à roues à plusieurs essieux, caractérisé par le fait qu'au moins la totalité des essieux avant ou la totalité des essieux arrière, respectivement du côté gauche et du côté droit, sont équipés d'unités de dosage (21a, 21b, 21'a, 21'b) distinctes pouvant être commandées indépendamment l'une de l'autre.
